# EUROPEAN PATENT APPLICATION

(11) **EP 4 343 717 A1**
(43) Date of publication of application: **27.03.2024**
(21) Application number: 23712142.1
(22) Date of filing: 27.03.2023
(51) Int. Cl.: G06V 20/10

(54) **IMAGE LAYERING METHOD AND APPARATUS, ELECTRONIC DEVICE, AND STORAGE MEDIUM**

(30) Priority: 12.08.2022 CN 202210970146
(71) Applicant: Beijing Zitiao Network Technology Co., Ltd., Beijing 100190 (CN)
(72) Inventor: The designation of the inventor has not yet been filed
(74) Representative: Dentons UK and Middle East LLP
(86) International application number: PCT/CN2023/084030
(87) International publication number: WO 2024/031999

(57) **Abstract**

Provided are an image layering method and apparatus, an electronic device, and a storage medium. The image layering method includes acquiring a to-be-processed two-dimensional scene image, and determining a target segmentation image of the two-dimensional scene image and a target depth image of the two-dimensional scene image, where the target segmentation image includes at least one target segmentation region; determining a depth level corresponding to at least part of the at least one target segmentation region in the target segmentation image according to the target segmentation image and the target depth image; and generating a target layering image corresponding to the two-dimensional scene image based on the at least one target segmentation region and a depth level corresponding to the at least part of the at least one target segmentation region.

## Description

This application claims priority to Chinese Patent Application No. 202210970146.3 filed with the China National Intellectual Property Administration (CNIPA) on Aug. 12, 2022, the disclosure of which is incorporated herein by reference in its entirety.

### TECHNICAL FIELD

Embodiments of the present disclosure relate to image processing technologies, for example, an image layering method and apparatus, an electronic device, and a storage medium.

### BACKGROUND

With the continuous enrichment and development of autonomous driving, visual effects, and virtual reality (VR) experience, there is an increasing requirement for image processing diversity. In some application scenarios, a two-dimensional image needs to be layered so that the two-dimensional image has the level of the depth of field.

In the related art, the layering results of different two-dimensional images are unstable. Especially for subjects with multiple semantic categories in a two-dimensional image, the same subject in the image may be divided into different levels after the layering of the image, resulting in a fragmentation result.

### SUMMARY

The present disclosure provides an image layering method and apparatus, an electronic device, and a storage medium to implement image layering.

In a first aspect, an embodiment of the present disclosure provides an image layering method. The method includes acquiring a to-be-processed two-dimensional scene image, and determining a target segmentation image of the two-dimensional scene image and a target depth image of the two-dimensional scene image, where the target segmentation image includes at least one target segmentation region; determining a depth level corresponding to at least part of the at least one target segmentation region in the target segmentation image according to the target segmentation image and the target depth image; and generating a target layering image corresponding to the two-dimensional scene image based on the at least one target segmentation region and the depth level corresponding to the at least part of the at least one target segmentation region.

In a second aspect, an embodiment of the present disclosure provides an image layering apparatus. The apparatus includes a scene image acquisition module, a depth level determination module, and a layering image generation module.

The scene image acquisition module is configured to acquire a to-be-processed two-dimensional scene image and determine a target segmentation image of the two-dimensional scene image and a target depth image of the two-dimensional scene image. The target segmentation image includes at least one target segmentation region.

The depth level determination module is configured to determine a depth level corresponding to at least part of the at least one target segmentation region in the target segmentation image according to the target segmentation image and the target depth image.

The layering image generation module is configured to generate a target layering image corresponding to the two-dimensional scene image based on the at least one target segmentation region and a depth level corresponding to the at least part of the at least one target segmentation region.

In a third aspect, an embodiment of the present disclosure provides an electronic device. The electronic device includes one or more processors and a memory.

The memory apparatus is configured to store one or more programs.

The one or more programs, when executed by the one or more processors, cause the one or more processors to implement the image layering method in the first aspect.

In a fourth aspect, an embodiment of the present disclosure provides a storage medium comprising a computer-executable instruction which, when executed by a processor of a computer, is configured to execute the image layering method in the first aspect.

### BRIEF DESCRIPTION OF DRAWINGS

Throughout the drawings, same or similar reference numerals in the drawings denote same or similar elements. It is to be understood that the drawings are illustrative and that originals and elements are not necessarily drawn to scale.
FIG. 1 is a flowchart of an image layering method according to an embodiment of the present disclosure.
FIG. 2 is a flowchart of another image layering method according to an embodiment of the present disclosure.
FIG. 3 is a flowchart of another image layering method according to an embodiment of the present disclosure.
FIG. 4 is a flowchart of another image layering method according to an embodiment of the present disclosure.
FIG. 5 is a scenario diagram for executing an image layering method in an embodiment of the present disclosure according to an embodiment of the present disclosure.
FIG. 6 is a diagram of a semantic segmentation image of a two-dimensional scene image in an image layering method according to an embodiment of the present disclosure.
FIG. 7 is a scenario diagram of a target depth image in an image layering method according to an embodiment of the present disclosure.
FIG. 8 is a scenario diagram of to-be-processed segmentation regions included in a semantic segmentation image in an image layering method according to an embodiment of the present disclosure.
FIG. 9 is a diagram of a target segmentation image of a two-dimensional scene image in an image layering method according to an embodiment of the present disclosure.
FIG. 10 is a diagram of a target layering image obtained by executing an image layering method in an embodiment of the present disclosure according to an embodiment of the present disclosure.
FIG. 11 is a diagram illustrating the structure of an image layering apparatus according to an embodiment of the present disclosure.
FIG. 12 is a diagram illustrating the structure of an image layering electronic device according to an embodiment of the present disclosure.

### DETAILED DESCRIPTION

It is to be understood that various steps recited in the method embodiments of the present disclosure may be performed in a different order, and/or in parallel. In addition, the method embodiments may include additional steps and/or omit execution of illustrated steps. The scope of the present disclosure is not limited in this respect.

As used herein, the term "comprise" and variations thereof are intended to be inclusive, that is, "including, but not limited to". The term "based on" is "at least partially based on". The term "an embodiment" refers to "at least one embodiment"; the term "another embodiment" refers to "at least one another embodiment"; the term "some embodiments" refers to "at least some embodiments". Related definitions of other terms are given in the description hereinafter.

It is to be noted that references to "first", "second" and the like in the present disclosure are merely intended to distinguish one from another apparatus, module, or unit and are not intended to limit the order or interrelationship of the functions performed by the apparatus, module, or unit.

It is to be noted that references to modifications of "one" or "a plurality" in the present disclosure are intended to be illustrative and not limiting, and that those skilled in the art should understand that "one" or "a plurality" should be understood as "one or more" unless clearly expressed in the context.

The names of messages or information exchanged between multiple apparatuses in embodiments of the present disclosure are only for illustrative purposes and are not intended to limit the scope of such messages or information.

It is to be understood that prior to the use of the technical solutions disclosed in the embodiments of the present disclosure, the type of personal information, the range of use, the scenario of use, and the like, involved in the present disclosure should be informed to a user and authorized by the user in an appropriate manner in accordance with the relevant laws and regulations.

For example, in response to receiving the active request of a user, prompt information is sent to the user to explicitly prompt the user that the operation requested to execute by the user needs to acquire and use the personal information of the user. Thus, according to the prompt information, the user can voluntarily choose whether to provide personal information to software or hardware such as electronic devices, applications, servers, or storage mediums that perform operations of the technical solutions of the present disclosure.

As an example, but not limiting, implementation, in response to receiving the active request of a user, prompt information may be sent to the user in a manner such as a pop-up notification. The prompt information may be presented in text in the pop-up notification. In addition, the pop-up notification can also carry a selection control for the user to choose "agree" or "disagree" to provide personal information to an electronic device.

It is to be understood that the preceding process of notifying and acquiring user authorization is only illustrative. This does not limit the implementation of the present disclosure. Other manners that satisfy relevant laws and regulations can also be applied to the implementation of the present disclosure.

It is to be understood that the data referred to in this technical solution (including but not limited to the data, the acquisition or use of the data) should comply with the requirements of the corresponding laws and regulations and the relevant provisions.

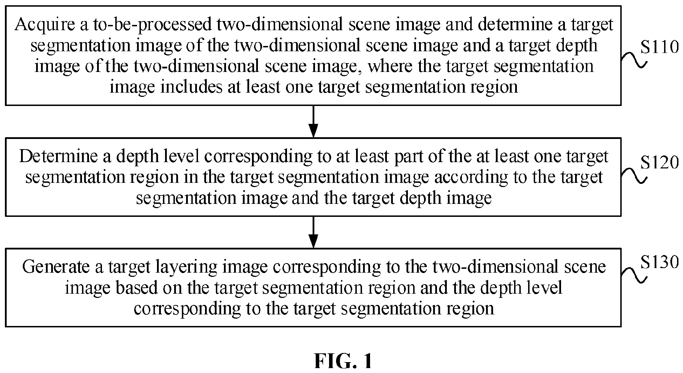

FIG. 1 is a flowchart of an image layering method according to an embodiment of the present disclosure. This embodiment of the present disclosure is applicable to the case where a layering process is performed on a two-dimensional image to obtain a layering image having a level of a depth of field. The method may be executed by an image layering apparatus. This apparatus may be implemented in the form of software and/or hardware. For example, this apparatus may be implemented by an electronic device. This electronic device may be a mobile terminal, a personal computer (PC) terminal, or a server.

As shown in FIG. 1, the method includes steps described below.

In S 110, a to-be-processed two-dimensional scene image is acquired, and a target segmentation image of the two-dimensional scene image and a target depth image of the two-dimensional scene image are determined, where the target segmentation image includes at least one target segmentation region.

The two-dimensional scene image may be understood as a to-be-layered two-dimensional image.

It is to be understood that the scene objects contained in the acquired two-dimensional scene image are related to an actual application scenario. In different application scenarios, the scene objects of the acquired two-dimensional scene image may be different. Exemplarily, the two-dimensional scene image may be a game scene image or a driving scene image. For example, in a game scene, the two-dimensional scene image may be a two-dimensional image including a game-related subject acquired for the game scene. In an autonomous driving scene, the two-dimensional scene image may be a two-dimensional image including a driving-related subject acquired for autonomous driving. For example, the two-dimensional scene image may be a two-dimensional driving environment image used in an autonomous driving test scene or a two-dimensional image related to an immersive scene experience series in an in-vehicle entertainment system. In a VR scene, the two-dimensional scene image may be a two-dimensional image of an environment-related subject, and this two-dimensional image is used for constructing a VR stereoscopic environment. In a scene with video effects, the two-dimensional scene image may be a two-dimensional image including an effects-related subject acquired for video effects.

The target segmentation image may be understood as an image in which the two-dimensional scene image is segmented to obtain scene subjects of multiple semantic categories. In the target segmentation image, each scene subject segmented may be used as a target segmentation region. For example, target segmentation regions belonging to the same semantic category may be identified. For example, the same identifier may be used for marking target segmentation regions of the same semantic category. For example, different colors may be used for marking target segmentation regions of different semantic categories. As described above, the scene subjects contained in different two-dimensional scene images may also be various. In order that a layered image can still have the semantic information of a two-dimensional scene image, the two-dimensional scene image can be segmented semantically to obtain the target segmentation image of the two-dimensional scene image to distinguish different types of scene subjects in a two-dimensional scene.

For example, in this embodiment of the present disclosure, the two-dimensional scene image may be processed by a semantic segmentation model to obtain the target semantic segmentation map of the two-dimensional scene image.

The target depth image may be understood as an image including depth information of each pixel in a two-dimensional scene image. For example, for the two-dimensional scene image, the target depth image of the two-dimensional scene image is determined by depth estimation processing. In this embodiment of the present disclosure, the depth estimation processing may be performed on the two-dimensional scene image by using a depth estimation model to determine the target depth image of the two-dimensional scene image.

For example, the target segmentation image of the two-dimensional scene image and the target depth image of the two-dimensional scene image are determined in the following manner: the target depth image of the two-dimensional scene image is determined based on a pre-trained depth estimation model. The depth estimation model is trained according to a sample two-dimensional image and an expected depth image corresponding to the sample two-dimensional image.

The target depth image may be understood as an image including information about a distance of each pixel point in a two-dimensional scene image from point of sight to an object in the two-dimensional scene image. The point of sight is generally a device for capturing images.

The sample two-dimensional image may be understood as a two-dimensional image used for training the depth estimation model. The expected depth image may be understood as a depth image that is expected to be acquired by processing the sample two-dimensional image through the depth estimation model.

For example, the depth estimation model may be obtained through training a pre-established initial depth network model based on a sample two-dimensional image and an expected depth image corresponding to the sample two-dimensional image. For example, the target depth image of the two-dimensional scene image is determined according to a trained depth estimation model. Exemplarily, the initial depth network model may be a dense prediction transformer (DPT) neural network model.

In S 120, a depth level corresponding to at least part of the at least one target segmentation region in the target segmentation image is determined according to the target segmentation image and the target depth image.

The target segmentation region may be understood as a segmentation region in the target semantic segmentation map. The depth level may be understood as a depth category to which the target segmentation region in the target segmentation image belongs. In this embodiment of the present disclosure, the number of depth levels may be set according to actual requirements and is not limited herein. Exemplarily, each target segmentation region in the target segmentation image is divided into three depth levels. In other words, each target segmentation region in the target segmentation image may be divided into three categories according to depth information. For example, each target segmentation region in the target segmentation image may be divided into a close-range region, a medium-range region, and a long-range region according to depth information.

For example, a depth level corresponding to each target segmentation region may be determined based on the preset number of depth levels and depth information of each pixel in the target depth image.

For example, clustering processing is performed on multiple target segmentation regions according to depth information corresponding to each target segmentation region in the target depth image, and a depth level corresponding to each target segmentation region in the target segmentation image is determined according to a clustering result. It is to be understood that one or more target segmentation regions may belong to the same depth level.

For example, a depth level corresponding to each target segmentation region in the target segmentation image is determined according to the target segmentation image and the target depth image. Alternatively, depth levels corresponding to part of the target segmentation region in the target segmentation image are determined according to the target segmentation image and the target depth image. Understandably, it is necessary to determine which depth levels corresponding to target segmentation regions can be set according to actual requirements, or some rules can be set for screening. There is no specific limitation on the number of the target segmentation regions or the determination manner of the target segmentation regions for which the depth levels need to be determined.

In S130, a target layering image corresponding to the two-dimensional scene image is generated based on the target segmentation region and the depth level corresponding to the target segmentation region.

For example, each target segmentation region in the target segmentation image is marked based on a preset region marking manner corresponding to each depth level and a depth level corresponding to the target segmentation region to obtain the target layering image corresponding to the two-dimensional scene image.

The region marking manner may be understood as a manner in which region labeling is performed for each target segmentation region according to the depth level corresponding to the each target segmentation region. It is to be understood that the region marking manner may be preset according to requirements and is not limited herein. For example, different colors may be used for marking the target segmentation regions corresponding to different depth levels; or different symbols may be used for marking the target segmentation regions corresponding to different depth levels.

For example, a depth level corresponding to each target segmentation region in the target segmentation image is determined according to the target segmentation image and the target depth image. For example, target segmentation regions belonging to the same depth level are marked with the same type. For example, the marked image is used as a target layering image corresponding to the two-dimensional scene image.

According to the technical solutions of this embodiment of the present disclosure, the to-be-processed two-dimensional scene image is acquired, and the target segmentation image of the two-dimensional scene image and the target depth image of the two-dimensional scene image are determined, where the target segmentation image includes at least one target segmentation region, so that the semantic information and depth information of the two-dimensional scene image can be acquired. For example, a depth level corresponding to each target segmentation region in the target segmentation image is determined according to the target segmentation image and the target depth image. Combined with the semantic information and depth information of the two-dimensional scene image, a region layering result having the level of the depth of field is generated, thereby achieving accurate layering of the two-dimensional scene image. Finally, a target layering image corresponding to the two-dimensional scene image is generated based on each target segmentation region and a depth level corresponding to each target segmentation region in the target segmentation image. Therefore, the situation of unstable layering of a two-dimensional image in the related art is avoided, the layering of the two-dimensional scene image is implemented, the level of the depth of field of the two-dimensional image is enriched, and the accuracy of the image layering is improved.

In this embodiment of the present disclosure, for example, the to-be-processed two-dimensional scene image is acquired in the following manner: the to-be-processed two-dimensional scene image is acquired in response to an image conversion trigger operation. Accordingly, after the target layering image corresponding to the two-dimensional scene image is generated based on the target segmentation region and the depth level corresponding to the target segmentation region, the method further includes that a three-dimensional scene image is generated based on the target layering image and the three-dimensional scene image is displayed.

The image conversion trigger operation may be generated in multiple manners. For example, the image conversion trigger operation may be a control trigger operation acting on a preset image conversion control or may be generated by receiving an information input operation of preset voice information or preset gesture information. Alternatively, the image conversion trigger operation may be generated by receiving an effect trigger operation for enabling a target effect for converting a two-dimensional scene image into a three-dimensional scene image or generated when it is detected that the current display scene is a preset image conversion scene.

For example, that the to-be-processed two-dimensional scene image is acquired includes at least one of the following: a two-dimensional scene image uploaded based on a preset image upload control is received; a two-dimensional scene image is collected based on an image capture apparatus; or a target image frame is acquired from a target video as a two-dimensional scene image. It is to be noted that the target image frame may be each frame or part of frames in the target video. In this embodiment of the present disclosure, which frame in the target video the target image frame is and the acquisition manner of the target image frame can be determined according to actual requirements, and these are not limited herein.

Since the target layering image includes information about the depth of field, a three-dimensional scene image can be generated based on the target layering image of the two-dimensional scene image. In this embodiment of the present disclosure, there may be many manners to generate a three-dimensional scene image based on the two-dimensional scene image and the target layering image. Exemplarily, point cloud data corresponding to a two-dimensional scene image may be acquired, and a three-dimensional scene image may be generated according to the two-dimensional scene image, the point cloud data, and the target layering image. For example, the target segmentation regions corresponding to the same depth level in the target layering image may use the same depth information. Compared with the related art in which depth estimation is performed on each scene subject in a two-dimensional scene image, in the embodiment of the present disclosure, a three-dimensional scene image can be generated more quickly through depth information corresponding to multiple depth levels in the target layering image, thereby improving the response efficiency to the image conversion request of a user.

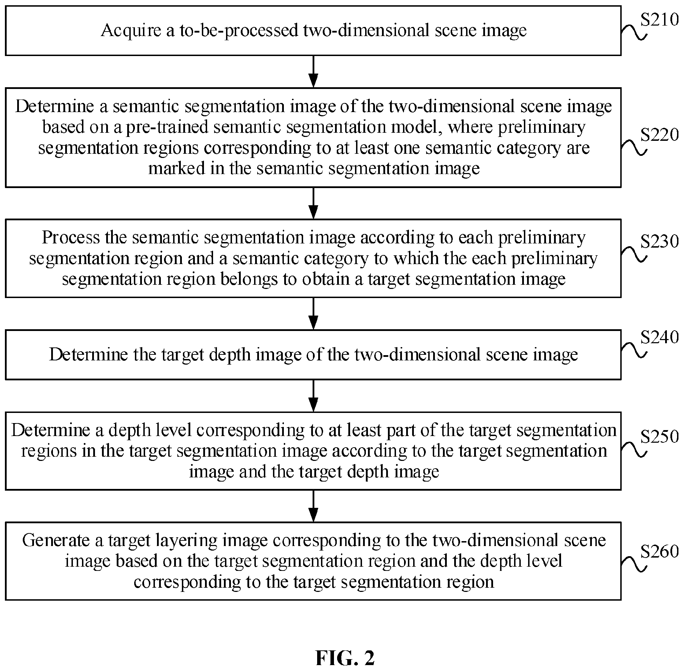

FIG. 2 is a flowchart of another image layering method according to an embodiment of the present disclosure. This embodiment refines how to determine the target segmentation image of the two-dimensional scene image in the preceding embodiment.

As shown in FIG. 2, the method in this embodiment of the present disclosure may include steps described below.

In S210, a to-be-processed two-dimensional scene image is acquired.

In S220, a semantic segmentation image of the two-dimensional scene image is determined based on a pre-trained semantic segmentation model, where preliminary segmentation regions corresponding to at least one semantic category are marked in the semantic segmentation image.

The semantic segmentation model may be understood as a model for segmenting the two-dimensional scene image and classifying pixels belonging to the same category into one semantic category. For example, the semantic segmentation model may be a MaskFormer neural network model, a SegNet neural network model, a PSPNet neural network model, or the like. Exemplarily, in the two-dimensional scene image, the semantic segmentation model divides pixels belonging to cups into a semantic category, pixels belonging to tables into a semantic category, pixels belonging to chairs into a semantic category, and background walls into a semantic category. It is to be understood that different semantic segmentation models may have different presets for semantic categories. Therefore, a semantic segmentation model may be selected according to requirements and is not limited herein.

For example, a sample two-dimensional image may be acquired; scene subjects of multiple semantic categories in the sample two-dimensional image are marked to obtain an expected semantic segmentation image; and a pre-established initial segmentation model is trained according to the sample two-dimensional image and the expected semantic segmentation image to obtain a semantic segmentation model. The semantic segmentation image may be understood as an image output by a model after the two-dimensional scene image is segmented and processed by the semantic segmentation model. The preliminary segmentation region may be understood as each segmentation region in the semantic segmentation image.

In this embodiment of the present disclosure, a preliminary segmentation region corresponding to each semantic category in the semantic segmentation image may be marked by the semantic segmentation model. For example, different colors may be used for marking preliminary segmentation regions corresponding to different semantic categories; or different symbols may be used for marking preliminary segmentation regions corresponding to different semantic categories. For example, the initial segmentation model may be a MaskFormer neural network model, a SegNet neural network model, a PSPNet neural network model, or the like.

In S230, the semantic segmentation image is processed according to at least part of the preliminary segmentation regions and the semantic category to which the preliminary segmentation region belongs to obtain a target segmentation image.

Considering the existing deep learning-based semantic segmentation technology, there may be excessive dependence on the data set, so accurate segmentation cannot be performed, resulting in a fragmentation result. For a slightly complex scenario, a general segmentation model often produces a lot of fragmented segmentation results and may divide the same ground into multiple segmentation regions. Therefore, in this embodiment of the present disclosure, the target semantic segmentation map of the two-dimensional scene image can be determined by performing defragmentation processing on the semantic segmentation image according to each preliminary segmentation region and the semantic category to which the each preliminary segmentation region belongs. It is to be understood that the defragmentation processing may be a process of merging part of preliminary segmentation regions in the semantic segmentation image according to each preliminary segmentation region and the semantic category to which the each preliminary segmentation region belongs.

For example, for all preliminary segmentation regions in the semantic segmentation image, an operation of processing the semantic segmentation image according to each preliminary segmentation region and the semantic category to which the each preliminary segmentation region belongs is executed to obtain a target segmentation image. Alternatively, for part of the preliminary segmentation regions in the semantic segmentation image, an operation of processing the semantic segmentation image according to each preliminary segmentation region and the semantic category to which the each preliminary segmentation region belongs is executed to obtain a target segmentation image. For example, for a preliminary segmentation region whose semantic category belongs to a preset category in the semantic segmentation image, an operation of processing the semantic segmentation image according to each preliminary segmentation region and the semantic category to which the each preliminary segmentation region belongs is executed to obtain a target segmentation image.

In S240, the target depth image of the two-dimensional scene image is determined.

In S250, a depth level corresponding to at least part of the target segmentation regions in the target segmentation image is determined according to the target segmentation image and the target depth image.

In S260, a target layering image corresponding to the two-dimensional scene image is generated based on the target segmentation region and the depth level corresponding to the target segmentation region.

According to the technical solutions of this embodiment of the present disclosure, the semantic segmentation image of the two-dimensional scene image is determined based on a pre-trained semantic segmentation model. Preliminary segmentation regions corresponding to at least one semantic category is marked in the semantic segmentation image. For example, the semantic segmentation image is processed according to each preliminary segmentation region and the semantic category to which the each preliminary segmentation region belongs to obtain the target segmentation image. Thus, the segmentation result that eliminates segmentation fragments is acquired, and the segmentation ambiguity is eliminated so that the segmentation result is more accurate.

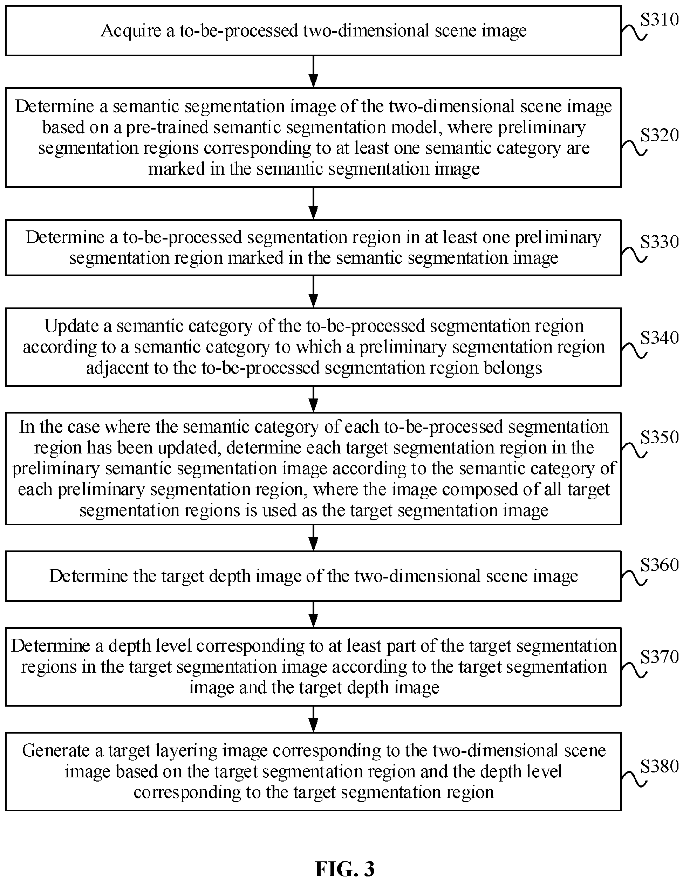

FIG. 3 is a flowchart of another image layering method according to an embodiment of the present disclosure. This embodiment refines how to determine the target segmentation image of the two-dimensional scene image in the preceding embodiments.

As shown in FIG. 3, the method in this embodiment of the present disclosure specifically includes steps described below.

In S310, a to-be-processed two-dimensional scene image is acquired.

In S320, a semantic segmentation image of the two-dimensional scene image is determined based on a pre-trained semantic segmentation model, where preliminary segmentation regions corresponding to at least one semantic category are marked in the semantic segmentation image.

In S330, a to-be-processed segmentation region in at least one preliminary segmentation region marked in the semantic segmentation image is determined.

In the case where fragmentation exists in the segmentation result of the two-dimensional scene image processed by the semantic segmentation model, according to the image layering method proposed by this embodiment of the present disclosure, defragmentation processing is first performed on the segmentation result before multiple segmentation regions are layered by the target depth image, so that a more uniformly regionalized segmentation result is obtained.

The to-be-processed segmentation region may be understood as a to-be-defragmented segmentation region in at least one preliminary segmentation region marked in the semantic segmentation image or a preliminary segmentation region to be merged into other preliminary segmentation regions. For example, the to-be-processed segmentation region in the semantic segmentation image is determined through a preset region screening algorithm. In this embodiment of the present disclosure, the region screening algorithm for determining the to-be-processed segmentation region may be preset according to requirements and is not limited herein.

For example, the to-be-processed segmentation region in the at least one preliminary segmentation region marked in the semantic segmentation image is determined in the following manner: the to-be-processed segmentation region in the at least one preliminary segmentation region marked in the semantic segmentation image is determined according to the region area of each preliminary segmentation region.

For example, in the semantic segmentation image, a segmentation region which is not connected and has a small area is acquired as a to-be-processed segmentation region through a connected domain algorithm. For example, a to-be-processed segmentation region may be a to-be-processed segmentation region with the minimum area among all preliminary segmentation regions marked in the semantic segmentation image. Alternatively, to-be-processed segmentation regions may be a preset number of regions with a leading order in an ascending order of areas or may be a preset number of regions with a trailing order in a descending order of areas.

For example, the to-be-processed segmentation region in the at least one preliminary segmentation region marked in the semantic segmentation image is determined according to the region area of each preliminary segmentation region in the following manner: for each preliminary segmentation region, a preliminary segmentation region of the at least one preliminary segmentation region marked in the semantic segmentation image whose region area is less than or equal to a preset area threshold is used as the to-be-processed segmentation region. Alternatively, for each preliminary segmentation region, a preliminary segmentation region of the at least one preliminary segmentation region marked in the semantic segmentation image whose proportion of region area to image area of the semantic segmentation image does not exceed a preset proportion threshold is used as the to-be-processed segmentation region.

For example, a preset area threshold is determined, and in the semantic segmentation image, a preliminary segmentation region whose region area is less than or equal to the preset area threshold is used as a to-be-processed segmentation region through a connected domain algorithm. It is to be understood that the to-be-processed segmentation region is generally a segmentation region with a small area or a small relative area in the semantic segmentation image. In this embodiment of the present disclosure, the preset area threshold may be preset according to requirements and is not limited herein. It is to be understood that for different application scenarios, the size of the acquired two-dimensional scene image is different, and the size of the preliminary segmentation region corresponding to each semantic category in the two-dimensional scene image is also different. Therefore, for different application scenarios, the preset area threshold may be the same or different. For example, for each preliminary segmentation region, a preliminary segmentation region of at least one preliminary segmentation region marked in the semantic segmentation image whose region area does not exceed a preset area threshold is used as the to-be-processed segmentation region.

Alternatively, a preset proportion threshold is determined, and in the semantic segmentation image, a preliminary segmentation region whose proportion of region area to image area of the semantic segmentation image does not exceed the preset proportion threshold is used as the to-be-processed segmentation region through a connected domain algorithm. It is to be understood that the to-be-processed segmentation region is generally a segmentation region with relatively small image area proportion in the semantic segmentation image. In this embodiment of the present disclosure, the preset proportion threshold may be preset according to requirements and is not limited herein. Exemplarily, the preset proportion threshold may be 1%, 3%, or 5%. For example, for each preliminary segmentation region, a preliminary segmentation region of the at least one preliminary segmentation region marked in the semantic segmentation image whose proportion of region area to image area of the semantic segmentation image does not exceed 1% is used as the to-be-processed segmentation region.

In S340, a semantic category of the to-be-processed segmentation region is updated according to a semantic category to which a preliminary segmentation region adjacent to the to-be-processed segmentation region belongs.

For example, the semantic category of the to-be-processed segmentation region is updated according to the semantic category to which the preliminary segmentation region adjacent to the to-be-processed segmentation region belongs so that disconnected to-be-processed segmentation regions are eliminated one by one to obtain a more uniform segmentation result.

For example, the preliminary segmentation region adjacent to the to-be-processed segmentation region in the semantic segmentation image is acquired as a reference adjacent region, the target reference adjacent region corresponding to the to-be-processed segmentation region is determined according to the reference adjacent region, and the semantic category to which the target reference adjacent region belongs is updated to the semantic category of the to-be-processed segmentation region.

The reference adjacent region may be understood as each preliminary segmentation region adjacent to the to-be-processed segmentation region in the semantic segmentation image. It is to be understood that one or more reference adjacent regions may exist. In the case where there are multiple reference adjacent regions, the semantic categories of the reference adjacent regions may be the same or different.

For example, the target reference adjacent region corresponding to the to-be-processed segmentation region is determined according to the reference adjacent region in the following manner: an overlapping length of a boundary of the to-be-processed segmentation region and a boundary of each reference adjacent region is calculated and a reference adjacent region with the longest overlapping length with the boundary of the to-be-processed segmentation region is used as the target reference adjacent region corresponding to the to-be-processed segmentation region.

For example, the to-be-processed segmentation region is acquired, and each reference adjacent region of the to-be-processed segmentation region is determined. For example, the overlapping length of the boundary of the to-be-processed segmentation region and the boundary of each reference adjacent region is calculated through a preset algorithm for calculating boundary length. For another example, the reference adjacent region with the longest overlapping length with the boundary of the to-be-processed segmentation region is acquired as the target reference adjacent region corresponding to the to-be-processed segmentation region.

It is to be understood that in the case where there is one reference adjacent region of the to-be-processed segmentation region, the reference adjacent region may be directly used as the target reference adjacent region of the to-be-processed segmentation region. In the case where there are multiple reference adjacent regions of the to-be-processed segmentation region, there may be one or more reference adjacent regions with the longest overlapping length with the boundary of the to-be-processed segmentation region. In the case where there is one reference adjacent region with the longest overlapping length of the boundary of the to-be-processed segmentation region, the reference adjacent region is used as the target reference adjacent region corresponding to the to-be-processed segmentation region. In the case where there are multiple reference adjacent regions with the longest overlapping length of the boundary of the to-be-processed segmentation region, one reference adjacent region may be randomly acquired from the multiple reference adjacent regions as the target reference adjacent region corresponding to the to-be-processed segmentation region. The target reference adjacent region in the multiple reference adjacent regions may be acquired through a randomized algorithm.

The algorithm for calculating the overlapping length of the boundary of the to-be-processed segmentation region and the boundary of each reference adjacent region may be preset according to requirements and is not limited herein. For example, the overlapping length may be determined according to the number of pixels where two regions overlap.

For example, each disconnected to-be-processed segmentation region is denoted as a region *a*. All segmentation regions *B* = {*b*₁, *b*₂, ..., *B* = {*b*₁, *b*₂, ..., *bₙ*} *B -* {,}*b*|1] *b*2 ... *bn* adjacent to the region *a* are acquired. The boundaries of all segmentation regions *B* = {*b*₁, *b*₂, ..., *B* = {*b*₁, *b*₂, ..., *bₙ*} overlapping with the region *a B -* {,}*b*|1] *b*2 ... *bn* are calculated. A segmentation block *bₓ* with the longest length that overlaps with the boundary of the region a is determined.

For example, after the target reference adjacent region corresponding to the to-be-processed segmentation region is acquired, the semantic category to which the target reference adjacent region belongs is updated to the semantic category of the to-be-processed segmentation region. In this embodiment of the present disclosure, the semantic category to which the target reference adjacent region belongs is updated to the semantic category of the to-be-processed segmentation region so that disconnected regions can be eliminated one by one to obtain a more uniform segmentation result.

In S350, in the case where the semantic category of each to-be-processed segmentation region has been updated, each target segmentation region in the semantic segmentation image is determined according to the semantic category of each preliminary segmentation region, and the image composed of all target segmentation regions is used as the target segmentation image.

The target segmentation region may be understood as each segmentation region in the semantic segmentation image acquired after the semantic category of each to-be-processed segmentation region has been updated. It is to be understood that the number of target segmentation regions is less than or equal to the number of preliminary segmentation regions. In this embodiment of the present disclosure, the image composed of all target segmentation regions is used as the target segmentation image.

In S360, the target depth image of the two-dimensional scene image is determined.

In S370, a depth level corresponding to at least part of the target segmentation regions in the target segmentation image is determined according to the target segmentation image and the target depth image.

In S380, a target layering image corresponding to the two-dimensional scene image is generated based on the target segmentation region and the depth level corresponding to the target segmentation region.

According to the technical solutions of this embodiment of the present disclosure, a to-be-eliminated fragment segmentation region is determined through determining a to-be-processed segmentation region in at least one preliminary segmentation region marked in the semantic segmentation image. According to the semantic category to which the preliminary segmentation region adjacent to the to-be-processed segmentation region belongs, the semantic category of the to-be-processed segmentation region is updated, and the fragment segmentation region is eliminated to obtain a more uniform segmentation result. In the case where the semantic category of each to-be-processed segmentation region has been updated, each target segmentation region in the semantic segmentation image is determined according to the semantic category of each preliminary segmentation region, and the image composed of all target segmentation regions is used as the target segmentation image. The segmentation ambiguity is eliminated so that the segmentation result is more accurate and uniform.

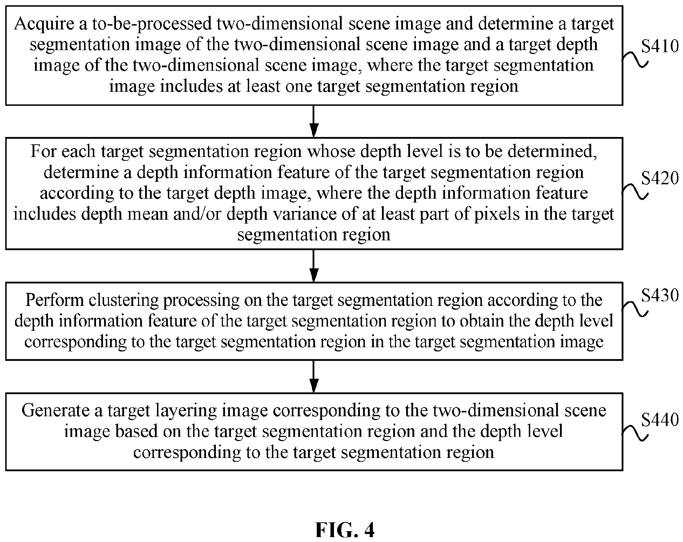

FIG. 4 is a flowchart of another image layering method according to an embodiment of the present disclosure. This embodiment refines how to determine a depth level corresponding to each target segmentation region in the two-dimensional scene image according to the target segmentation image and the target depth image in the preceding embodiments.

As shown in FIG. 4, the method in this embodiment of the present disclosure may include steps described below.

In S410, a to-be-processed two-dimensional scene image is acquired, and a target segmentation image of the two-dimensional scene image and a target depth image of the two-dimensional scene image are determined, where the target segmentation image includes at least one target segmentation region.

In S420, for each target segmentation region whose depth level is to be determined, a depth information feature of the target segmentation region is determined according to the target depth image, where the depth information feature includes depth mean and/or depth variance of at least part of pixels in the target segmentation region.

It is to be noted that the target segmentation region whose depth level is to be determined may be each target segmentation region in the target segmentation image or part of the target segmentation regions in the target segmentation image. In the summary of this embodiment of the present disclosure, the target segmentation region whose depth level is to be determined may be determined according to actual requirements. There is no limitation on which target segmentation regions has the need to determine the depth level.

The depth information feature may be understood as a feature vector that is used for characterizing depth information in a target segmentation region and formed based on the depth information feature value of the feature dimension of at least one piece of depth information. For example, the depth information feature may be depth mean and/or depth variance of at least part of pixels in the target segmentation region. It is to be understood that the at least part of pixels may be all pixels in the target segmentation region or part of pixels in the target segmentation region. It is to be noted that the number of pixels used for constructing the depth information feature may be preset according to requirements and is not limited herein. Exemplarily, the depth information of some pixels may be acquired randomly, or the depth information of a preset number of pixels may be acquired according to a set rule.

The depth mean may be understood as the mean of depth information of all pixels in the target segmentation region. The depth information may be understood as the acquired distance between each pixel point and point of sight. The depth variance may be understood as the variance of depth information of all pixels in the target segmentation region.

Exemplarily, after the defragmentation processing, there are still k target segmentation regions *A* = {*a*₁, *a*₂, ..., of different categories in the target semantic segmentation image *A* = {*a*₁, *a*₂, ..., *aₖ*}, where a_{kaₖ} denotes the target segmentation region of the k-th category. The depth information feature *D* = {*d*₁, *d*₂, ..., of each target segmentation region in different feature dimensions is calculated through the target depth image *D* = {*d*₁, *d*₂, ..., *dₘ*}, where *d_{mdₘ}* denotes the depth information feature value of the m-th dimension of the region.

In S430, clustering processing is performed on the target segmentation region according to the depth information feature of the target segmentation region to obtain the depth level corresponding to the target segmentation region in the target segmentation image.

The clustering processing may be understood as clustering and merging the segmentation regions with similar depth information features in the target segmentation regions into segmentation regions of the same depth level through the depth information features of the target segmentation regions. In this embodiment of the present disclosure, after the clustering processing is performed on all target segmentation regions, the number of the acquired segmentation regions may be preset according to requirements and is not limited herein. It is to be understood that after the clustering processing, the number of acquired segmentation regions is less than or equal to the number of target segmentation regions.

For example, the clustering processing is performed on the target segmentation region according to the depth information feature of the target segmentation region in the following manner: the clustering processing is performed on the target segmentation region according to the depth information feature of the target segmentation region and a preset unsupervised clustering algorithm. The preset unsupervised clustering algorithm includes at least one of a Euclidean distance-based clustering algorithm, a hierarchical clustering algorithm, a non-linear dimensionality reduction clustering algorithm, or a density-based clustering algorithm. Exemplarily, the Euclidean distance-based clustering algorithm may be a K-means algorithm. For example, the depth information feature of the target segmentation region of each to-be-determined depth level and a preset unsupervised clustering algorithm are acquired, and the segmentation regions with similar depth information features in the target segmentation regions are clustered and merged into regions of the same depth level.

In S440, a target layering image corresponding to the two-dimensional scene image is generated based on the target segmentation region and the depth level corresponding to the target segmentation region.

According to the technical solutions of this embodiment of the present disclosure, for each target segmentation region, the depth information feature of the target segmentation region is determined according to the target depth image, where the depth information feature includes depth mean and/or depth variance of at least part of pixels in the target segmentation region, so that target segmentation regions with similar depth information features are determined. For example, according to the depth information feature of each target segmentation region, clustering processing is performed on the target segmentation region to obtain the depth level corresponding to each target segmentation region in the target segmentation image, thereby acquiring a target layering image having a preset category and a level of a depth of field. Accurate classification of the depth of field levels of target segmentation regions is achieved.

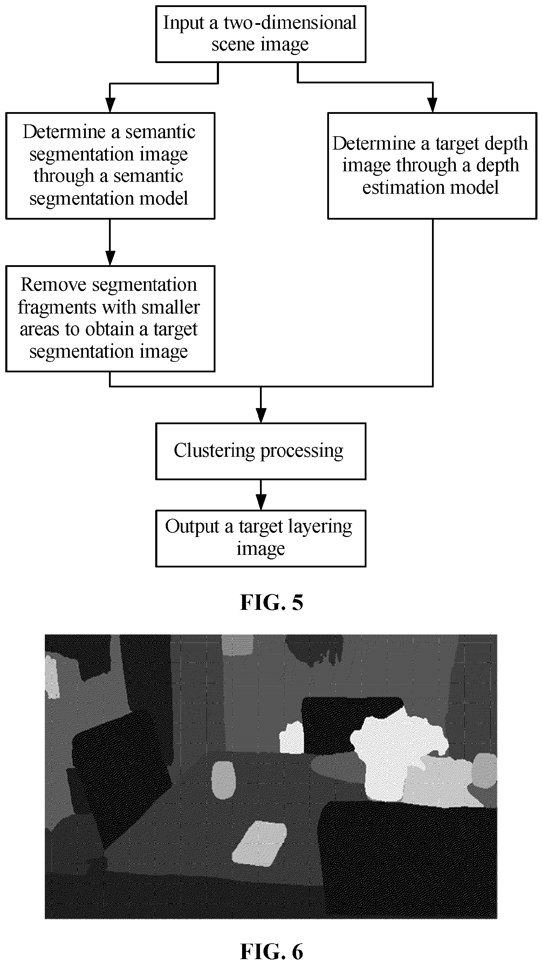

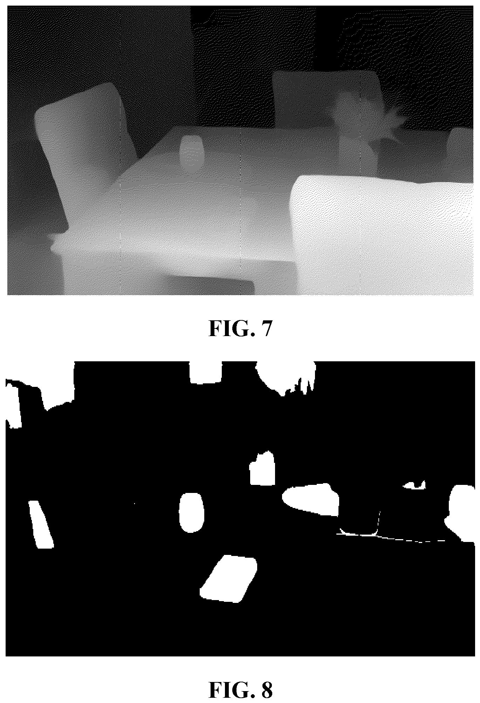

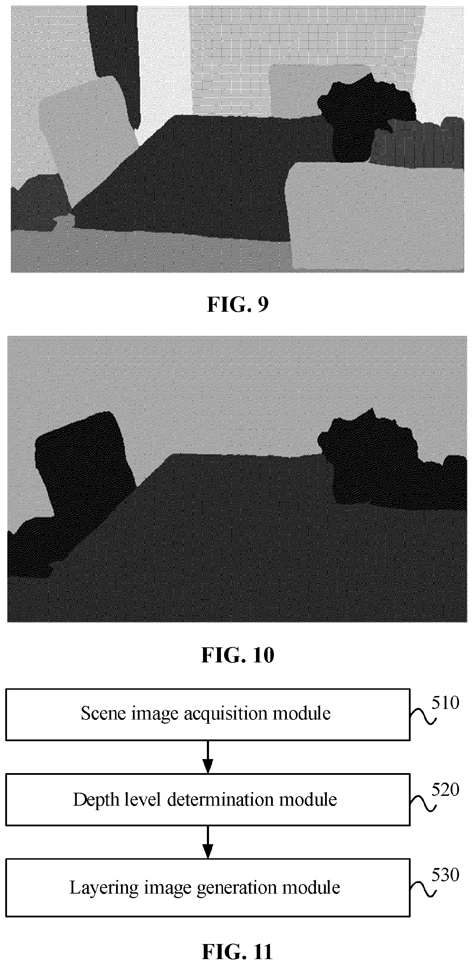

FIG. 5 is a scenario diagram for executing an image layering method in an embodiment of the present disclosure according to an embodiment of the present disclosure. FIG. 6 is a diagram of a semantic segmentation image of a two-dimensional scene image in an image layering method according to an embodiment of the present disclosure. FIG. 7 is a scenario diagram of a target depth image in an image layering method according to an embodiment of the present disclosure. FIG. 8 is a scenario diagram of to-be-processed segmentation regions included in a semantic segmentation image in an image layering method according to an embodiment of the present disclosure. FIG. 9 is a diagram of a target segmentation image of a two-dimensional scene image in an image layering method according to an embodiment of the present disclosure. FIG. 10 is a diagram of a target layering image obtained by executing an image layering method in an embodiment of the present disclosure according to an embodiment of the present disclosure.

As shown in FIG. 5, the execution flow of the image layering method mainly includes inputting a two-dimensional scene image; determining a target segmentation image through a semantic segmentation model; determining a target depth image through a depth estimation model; removing segmentation fragments with smaller areas; performing clustering processing; and outputting a target layering image.

The steps of the image layering method in this example embodiment are described below.
1. A two-dimensional scene image is input.
2. A semantic segmentation image is determined through a semantic segmentation model. The semantic segmentation result, that is, the semantic segmentation image, is output through the semantic segmentation model, as shown in FIG. 6. The semantic segmentation model used is, for example, a neural network model similar to the MaskFormer model structure.
3. A target depth image is determined through a depth estimation model. The relative depth relationship of the scenes in the two-dimensional scene image is predicted through the depth estimation model. The depth estimation result, that is, the target depth image, is given, as shown in FIG. 7. The depth estimation model used is, for example, similar to the DPT neural network model.
4. Segmentation fragments with smaller areas are removed. A connected domain algorithm is used for finding disconnected segmentation blocks with smaller areas from a semantic segmentation result or a panoramic segmentation result. The smaller area here may mean that the area of the segmented region accounts for a small proportion relative to the area of the entire semantic segmentation image. Thus, disconnected regions (white regions, that is, to-be-processed segmentation regions) with smaller areas as shown in FIG. 8 can be obtained from the segmentation result shown in FIG. 6. For example, for each disconnected region *a* as shown in FIG. 8, in all segmentation regions *B* = {*b*₁, *b*₂, ..., *B* = {*b*₁, *b*₂, ..., *bₙ*} adjacent to *a,* a segmentation block *bₓ* with the longest boundary with *a* is found. After a region *b_{xbₓ}* with the longest boundary with *a* in adjacent segmentation regions of each disconnected region *a* is found, the semantic category of *b_{xbₓ}* is assigned to the each disconnected region *a* to eliminate the each disconnected region a. Thus, disconnected regions can be eliminated one by one to obtain a more uniform segmentation result. A target segmentation image is obtained, as shown in FIG. 9.
5. Clustering processing is performed. It is assumed that after the segmentation fragments with smaller areas are removed, there are still k segmentation regions *A* = {*a*₁, *a*₂, ..., *A* = {*a*₁, *a*₂, ..., *aₖ*} of different categories. The depth map is used for calculating the depth information feature *D* = {*d*₁*, d₂,* ..., *D* = {*d*_{1,} *d*₂, ..., *dₘ*} of each region. d_{*i*dᵢ} includes the statistical feature of the depth information in each region, for example, mean or variance of the depth information of each pixel in the region. For example, the depth information feature *D* shown in FIG. 9 is used for performing unsupervised clustering on the segmentation regions through an algorithm similar to KMeans to obtain N categories with levels of the depth of field. N is a positive integer greater than or equal to 1.
6. A target layering image is obtained, as shown in FIG. 10.

According to the technical solutions of this embodiment of the present disclosure, an input two-dimensional scene image is given, semantic segmentation and depth estimation are performed first by using the semantic segmentation algorithm, and then, defragmentation processing and segmentation clustering are performed on the semantic segmentation result based on the depth information to obtain an image layering result, so that fragmentation of general semantic segmentation can be effectively reduced, and at the same time, a layering result with a depth of field level is generated.

FIG. 11 is a diagram illustrating the structure of an image layering apparatus according to an embodiment of the present disclosure. As shown in FIG. 11, the apparatus includes a scene image acquisition module 510, a depth level determination module 520, and a layering image generation module 530.

The scene image acquisition module 510 is configured to acquire a to-be-processed two-dimensional scene image and determine a target segmentation image of the two-dimensional scene image and a target depth image of the two-dimensional scene image. The target segmentation image includes at least one target segmentation region. The depth level determination module 520 is configured to determine a depth level corresponding to each target segmentation region in the target segmentation image according to the target segmentation image and the target depth image. The layering image generation module 530 is configured to generate a target layering image corresponding to the two-dimensional scene image based on each target segmentation region and the depth level corresponding to each target segmentation region.

According to the technical solutions of this embodiment of the present disclosure, the to-be-processed two-dimensional scene image is acquired, and the target segmentation image of the two-dimensional scene image and the target depth image of the two-dimensional scene image are determined, where the target segmentation image includes at least one target segmentation region, so that the semantic information and depth information of the two-dimensional scene image can be acquired. For example, a depth level corresponding to at least part of the target segmentation region in the target segmentation image is determined according to the target segmentation image and the target depth image. Combined with the semantic information and depth information of the two-dimensional scene image, a region layering result having a level of a depth of field is generated, thereby achieving accurate layering of the two-dimensional scene image. Finally, a target layering image corresponding to the two-dimensional scene image is generated based on the target segmentation region and the depth level corresponding to the target segmentation region. Therefore, the situation of unstable layering of a two-dimensional image in the related art is avoided, the layering of the two-dimensional scene image is implemented, the level of the depth of field of the two-dimensional image is enriched, and the accuracy of the image layering is improved.

For example, the scene image acquisition module 510 includes a semantic segmentation image determination submodule and a target segmentation image acquisition submodule.

The semantic segmentation image determination submodule is configured to determine a semantic segmentation image of the two-dimensional scene image based on a pre-trained semantic segmentation model. Preliminary segmentation region corresponding to at least one semantic category is marked in the semantic segmentation image.

The target segmentation image acquisition submodule is configured to process the semantic segmentation image according to each preliminary segmentation region and a semantic category to which the each preliminary segmentation region belongs to obtain a target segmentation image.

For example, the target segmentation image acquisition submodule includes a to-be-processed segmentation region determination unit, a semantic category updating unit, and a target segmentation image unit.

The to-be-processed segmentation region determination unit is configured to determine the to-be-processed segmentation region in the at least one preliminary segmentation region marked in the semantic segmentation image.

The semantic category updating unit is configured to update a semantic category of the to-be-processed segmentation region according to a semantic category to which a preliminary segmentation region adjacent to the to-be-processed segmentation region belongs.

The target segmentation image unit is configured to, in the case where the semantic category of each to-be-processed segmentation region has been updated, determine each target segmentation region in the semantic segmentation image according to the semantic category of each preliminary segmentation region, and use the image composed of all target segmentation regions as the target segmentation image.

For example, the to-be-processed segmentation region determination unit includes a to-be-processed segmentation region determination subunit.

The to-be-processed segmentation region determination subunit is configured to determine the to-be-processed segmentation region in the at least one preliminary segmentation region marked in the semantic segmentation image according to a region area of each preliminary segmentation region.

For example, the to-be-processed segmentation region determination subunit is configured to, for each preliminary segmentation region, use a preliminary segmentation region of at least one preliminary segmentation region marked in the semantic segmentation image whose region area is less than or equal to a preset area threshold as the to-be-processed segmentation region; or, for each preliminary segmentation region, use a preliminary segmentation region of at least one preliminary segmentation region marked in the semantic segmentation image whose proportion of region area to image area of the semantic segmentation image does not exceed a preset proportion threshold as the to-be-processed segmentation region.

For example, the semantic category updating unit includes a reference adjacent region determination subunit and a target reference adjacent region determination subunit.

The reference adjacent region determination subunit is configured to acquire a preliminary segmentation region adjacent to the to-be-processed segmentation region in the semantic segmentation image as a reference adjacent region.

The target reference adjacent region determination subunit is configured to determine the target reference adjacent region corresponding to the to-be-processed segmentation region according to the reference adjacent region and update a semantic category to which the target reference adjacent region belongs to the semantic category of the to-be-processed segmentation region.

For example, the target reference adjacent region determination subunit is configured to calculate an overlapping length of a boundary of the to-be-processed segmentation region and a boundary of each reference adjacent region and use a reference adjacent region with the longest overlapping length with the boundary of the to-be-processed segmentation region as the target reference adjacent region corresponding to the to-be-processed segmentation region.

For example, the scene image acquisition module 510 includes a target depth image determination submodule.

The target depth image determination submodule is configured to determine the target depth image of the two-dimensional scene image based on a pre-trained depth estimation model. The depth estimation model is trained according to a sample two-dimensional image and an expected depth image corresponding to the sample two-dimensional image.

For example, the depth level determination module 520 includes a depth information feature determination submodule and a depth level determination submodule.

The depth information feature determination submodule is configured to, for each target segmentation region whose depth level is to be determined, determine a depth information feature of the target segmentation region according to the target depth image. The depth information feature includes depth mean and/or depth variance of at least part of pixels in the target segmentation region.

The depth level determination submodule is configured to perform clustering processing on the target segmentation region according to the depth information feature of the target segmentation region to obtain the depth level corresponding to the target segmentation region in the target segmentation image.

For example, the depth level determination submodule includes a clustering processing unit.

The clustering processing unit is configured to perform clustering processing on the target segmentation region according to the depth information feature of each target segmentation region and a preset unsupervised clustering algorithm. The preset unsupervised clustering algorithm includes at least one of a Euclidean distance-based clustering algorithm, a hierarchical clustering algorithm, a non-linear dimensionality reduction clustering algorithm, or a density-based clustering algorithm.

For example, the layering image generation module 530 includes a target layering image determination submodule.

The target layering image determination submodule is configured to mark the target segmentation region in the target segmentation image based on a preset region marking manner corresponding to each depth level and the depth level corresponding to the target segmentation region to obtain the target layering image corresponding to the two-dimensional scene image.

For example, the scene image acquisition module 510 is configured to acquire the to-be-processed two-dimensional scene image in response to an image conversion trigger operation. For example, the image layering apparatus may further include a three-dimensional scene image display module. The three-dimensional scene image display module is configured to, after the target layering image corresponding to the two-dimensional scene image is generated based on the target segmentation region and the depth level corresponding to the target segmentation region, generate a three-dimensional scene image based on the two-dimensional scene image and the target layering image and display the three-dimensional scene image.

The image layering apparatus according to this embodiment of the present disclosure can execute the image layering method according to any embodiment of the present disclosure and has functional modules and beneficial effects corresponding to the execution methods.

It is to be noted that multiple units and modules involved in the preceding apparatuses are just divided according to functional logic, and the division is not limited to this, as long as the corresponding functions can be implemented. In addition, the specific names of multiple functional units are just intended for distinguishing and are not to limit the protection scope of this embodiment of the present disclosure.

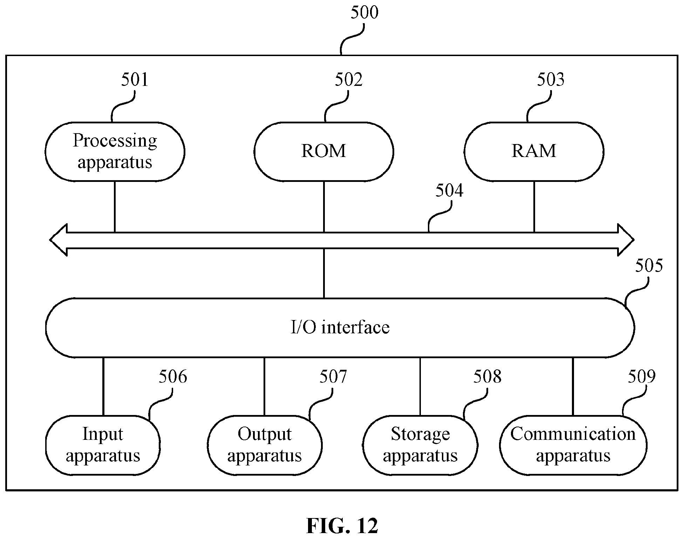

FIG. 12 is a diagram illustrating the structure of an electronic device according to an embodiment of the present disclosure. Referring to FIG. 12, FIG. 12 shows a structural diagram of an electronic device 500 (such as the terminal device or server in FIG. 12) applicable to implementing this embodiment of the present disclosure. A terminal device in this embodiment of the present disclosure may include, but is not limited to, mobile terminals such as a mobile phone, a laptop, a digital broadcast receiver, a personal digital assistant (PDA), a PAD, a portable media player (PMP), and an in-vehicle terminal (such as an in-vehicle navigation terminal) and stationary terminals such as a digital television (TV) and a desktop computer. The electronic device shown in FIG. 12 is merely an example and is not intended to limit the function and usage scope of this embodiment of the present disclosure.

As shown in FIG. 12, the electronic device 500 may include a processing apparatus 501 (such as a central processing unit and a graphics processing unit). The processing apparatus 501 may execute multiple types of appropriate operations and processing according to a program stored in a read-only memory (ROM) 502 or a program loaded from a storage apparatus 508 to a random-access memory (RAM) 503. Various programs and data required for the operation of the electronic device 500 are also stored in the RAM 503. The processing apparatus 501, the ROM 502, and the RAM 503 are connected to each other through a bus 504. An input/output (I/O) interface 505 is also connected to the bus 504.

Generally, the following apparatus may be connected to the I/O interface 505: an input apparatus 506 such as a touch screen, a touch pad, a keyboard, a mouse, a camera, a microphone, an accelerometer, and a gyroscope; an output apparatus 507 such as a liquid crystal display (LCD), a speaker, and a vibrator; the storage apparatus 508 such as a magnetic tape and a hard disk, and a communication apparatus 509. The communication apparatus 509 may allow the electronic device 500 to perform wireless or wired communication with other devices so as to exchange data. Although FIG. 12 shows the electronic device 500 having multiple apparatuses, it is to be understood that not all of the apparatuses shown herein need to be implemented or present. Alternatively, more or fewer apparatuses may be implemented or present.

According to this embodiment of the present disclosure, the process described above with reference to the flowchart may be implemented as a computer software program. For example, this embodiment of the present disclosure includes a computer program product. The computer program product includes a computer program carried in a non-transitory computer-readable medium. The computer program includes program codes for executing the method shown in the flowchart. In such an embodiment, the computer program may be downloaded from a network and installed through the communication apparatus 509, or may be installed from the storage apparatus 508, or may be installed from the ROM 502. When the computer program is executed by the processing apparatus 501, the preceding functions defined in the method of the embodiments of the present disclosure are executed.

The names of messages or information exchanged between multiple apparatuses in this embodiment of the present disclosure are only for illustrative purposes and are not intended to limit the scope of such messages or information.

The electronic device provided in this embodiment of the present disclosure belongs to the same inventive concept as the image layering methods provided in the preceding embodiments, and for the technical details not described in detail in this embodiment, reference can be made to the preceding embodiments, and this embodiment has the same beneficial effects as the preceding embodiments.

An embodiment of the present disclosure provides a computer storage medium storing a computer program which, when executed by a processor, implements the image layering methods provided in the preceding embodiments.

It is to be noted that the preceding computer-readable medium in the present disclosure may be a computer-readable signal medium or a computer-readable storage medium or any combination thereof. The computer-readable storage medium, for example, may be, but is not limited to, an electronic, magnetic, optical, electromagnetic, infrared or semiconductor system, apparatus or device or any combination thereof. More specific examples of the computer-readable storage medium may include, but are not limited to, an electrical connection with one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device, or any appropriate combination thereof. In the present disclosure, the computer-readable storage medium may be any tangible medium containing or storing a program. The program may be used by or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms and includes, and is not limited to, an electromagnetic signal, an optical signal, or any suitable combination thereof. The computer-readable signal medium may further be any computer-readable medium other than the computer-readable storage medium. The computer-readable signal medium may send, propagate, or transmit a program used by or in conjunction with an instruction execution system, apparatus, or device. The program codes contained on the computer-readable medium may be transmitted via any appropriate medium which includes, but is not limited to, a wire, an optical cable, a radio frequency (RF), or any appropriate combination thereof.

In some embodiments, clients and servers may communicate using any currently known or future developed network protocol, such as HyperText Transfer Protocol (HTTP), and may be interconnected with any form or medium of digital data communication (such as a communication network). Examples of the communication network include a local area network (LAN), a wide area networks (WAN), an internet (such as the Internet), and a peer-to-peer network (such as an Ad-Hoc network), as well as any currently known or future developed network.

The computer-readable medium may be contained in the electronic device or may exist alone without being assembled into the electronic device.

The computer-readable medium carries one or more programs which, when executed by the electronic device, cause the electronic device to acquire a to-be-processed two-dimensional scene image and determine a target segmentation image of the two-dimensional scene image and a target depth image of the two-dimensional scene image, where the target segmentation image includes at least one target segmentation region; determine a depth level corresponding to each target segmentation region in the target segmentation image according to the target segmentation image and the target depth image; and generate a target layering image corresponding to the two-dimensional scene image based on each target segmentation region and the depth level corresponding to the each target segmentation region.

Computer program codes for performing the operations in the present disclosure may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, partly on a user computer, as a stand-alone software package, partly on a user computer and partly on a remote computer, or entirely on a remote computer or a server. In the case relate to the remote computer, the remote computer may be connected to the user computer via any kind of network including a local area network (LAN) or a wide area network (WAN), or may be connected to an external computer (for example, via the Internet through an Internet service provider).

The flowcharts and block diagrams in the drawings show the possible architecture, function, and operation of the system, method, and computer program product according to multiple embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved. It is also to be noted that each block in the block diagrams and/or flowcharts and a combination of blocks in the block diagrams and/or flowcharts may be implemented by a special-purpose hardware-based system which executes specified functions or operations, or a combination of special-purpose hardware and computer instructions.

The units involved in the embodiments of the present disclosure may be implemented by software or hardware. The names of the units do not constitute a limitation on the units themselves. For example, a first acquisition unit may also be described as "a unit for acquiring at least two Internet protocol addresses".

The functions described above herein may be executed, at least partially, by one or more hardware logic components. For example, and without limitations, example types of hardware logic components that may be used include a field-programmable gate array (FPGA), an application-specific integrated circuit (ASIC), an application-specific standard product (ASSP), system on a chip (SOC), a complex programmable logic device (CPLD) and the like.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof.

According to one or more embodiments of the present disclosure, example one provides an image layering method. The method includes acquiring a to-be-processed two-dimensional scene image, and determining a target segmentation image of the two-dimensional scene image and a target depth image of the two-dimensional scene image, where the target segmentation image includes at least one target segmentation region; determining a depth level corresponding to at least part of the at least one target segmentation region in the target segmentation image according to the target segmentation image and the target depth image; and generating a target layering image corresponding to the two-dimensional scene image based on the target segmentation region and the depth level corresponding to the at least part of the at least one target segmentation region.

According to one or more embodiments of the present disclosure, example two provides the method of example one. Determining the target segmentation image of the two-dimensional scene image includes determining a semantic segmentation image of the two-dimensional scene image based on a pre-trained semantic segmentation model, where preliminary segmentation regions corresponding to at least one semantic category are marked in the semantic segmentation image and processing the semantic segmentation image according to at least part of the preliminary segmentation regions and a semantic category to which each of the preliminary segmentation regions belongs to obtain a target segmentation image.

According to one or more embodiments of the present disclosure, example three provides the method of example two. Processing the semantic segmentation image according to the at least part of the preliminary segmentation regions and the semantic category to which each of the preliminary segmentation regions belongs to obtain the target segmentation image includes determining a to-be-processed segmentation region in at least one preliminary segmentation region of the preliminary segmentation regions marked in the semantic segmentation image; updating a semantic category of the to-be-processed segmentation region according to a semantic category to which a preliminary segmentation region adjacent to the to-be-processed segmentation region belongs; and in the case where a semantic category of each to-be-processed segmentation region has been updated, determining each target segmentation region in the semantic segmentation image according to the semantic category of each preliminary segmentation region, and using an image composed of all target segmentation regions as the target segmentation image.

According to one or more embodiments of the present disclosure, example four provides the method of example three. Determining the to-be-processed segmentation region in the at least one preliminary segmentation region marked in the semantic segmentation image includes determining the to-be-processed segmentation region in at least one preliminary segmentation region marked in the semantic segmentation image according to a region area of each of the preliminary segmentation regions.

According to one or more embodiments of the present disclosure, example five provides the method of example four. Determining the to-be-processed segmentation region in the at least one preliminary segmentation region marked in the semantic segmentation image according to the region area of each of the preliminary segmentation regions includes, for each of the preliminary segmentation regions, using a preliminary segmentation region of the at least one preliminary segmentation region marked in the semantic segmentation image whose region area is less than or equal to a preset area threshold as the to-be-processed segmentation region; or, for each of the preliminary segmentation regions, using a preliminary segmentation region of the at least one preliminary segmentation region marked in the semantic segmentation image whose proportion of region area to image area of the semantic segmentation image does not exceed a preset proportion threshold as the to-be-processed segmentation region.

According to one or more embodiments of the present disclosure, example six provides the method of example three. Updating the semantic category of the to-be-processed segmentation region according to the semantic category to which the preliminary segmentation region adjacent to the to-be-processed segmentation region belongs includes acquiring the preliminary segmentation region adjacent to the to-be-processed segmentation region in the semantic segmentation image as a reference adjacent region; and determining the target reference adjacent region corresponding to the to-be-processed segmentation region according to the reference adjacent region, and updating a semantic category to which the target reference adjacent region belongs to the semantic category of the to-be-processed segmentation region.

According to one or more embodiments of the present disclosure, example seven provides the method of example six. Determining the target reference adjacent region corresponding to the to-be-processed segmentation region according to the reference adjacent region includes calculating an overlapping length of a boundary of the to-be-processed segmentation region and a boundary of each reference adjacent region and using a reference adjacent region with the longest overlapping length with the boundary of the to-be-processed segmentation region as the target reference adjacent region corresponding to the to-be-processed segmentation region.

According to one or more embodiments of the present disclosure, example eight provides the method of example one. Determining the target depth image of the two-dimensional scene image includes determining the target depth image of the two-dimensional scene image based on a pre-trained depth estimation model. The depth estimation model is trained according to a sample two-dimensional image and an expected depth image corresponding to the sample two-dimensional image.

According to one or more embodiments of the present disclosure, example nine provides the method of example one. Determining the depth level corresponding to the at least part of the target segmentation region in the two-dimensional scene image according to the target segmentation image and the target depth image includes, for each target segmentation region whose depth level is to be determined, determining a depth information feature of the each target segmentation region according to the target depth image, where the depth information feature includes depth mean and/or depth variance of at least part of pixels in the each target segmentation region; and performing clustering processing on the each target segmentation region according to the depth information feature of the each target segmentation region to obtain a depth level corresponding to each target segmentation region in the target segmentation image.

According to one or more embodiments of the present disclosure, example ten provides the method of example nine. Performing clustering processing on the target segmentation region according to the depth information feature of the each target segmentation region includes performing clustering processing on the each target segmentation region according to the depth information feature of the each target segmentation region and a preset unsupervised clustering algorithm. The preset unsupervised clustering algorithm includes at least one of a Euclidean distance-based clustering algorithm, a hierarchical clustering algorithm, a non-linear dimensionality reduction clustering algorithm, or a density-based clustering algorithm.

According to one or more embodiments of the present disclosure, example eleven provides the method of example one. Generating the target layering image corresponding to the two-dimensional scene image based on the depth level corresponding to each target segmentation region includes marking the target segmentation region in the target segmentation image based on a preset region marking manner corresponding to each depth level and the depth level corresponding to the target segmentation region to obtain the target layering image corresponding to the two-dimensional scene image.

According to one or more embodiments of the present disclosure, example twelve provides the method of example one. Acquiring the to-be-processed two-dimensional scene image includes acquiring the to-be-processed two-dimensional scene image in response to an image conversion triggering operation. After generating the target layering image corresponding to the two-dimensional scene image based on the target segmentation region and the depth level corresponding to the at least part of the at least one target segmentation region, the method further includes generating a three-dimensional scene image based on the two-dimensional scene image and the target layering image and displaying the three-dimensional scene image.

According to one or more embodiments of the present disclosure, example thirteen provides an image layering apparatus. The apparatus includes a scene image acquisition module, a depth level determination module, and a layering image generation module. The scene image acquisition module is configured to acquire a to-be-processed two-dimensional scene image and determine the target segmentation image of the two-dimensional scene image and the target depth image of the two-dimensional scene image. The target segmentation image includes at least one target segmentation region. The depth level determination module is configured to determine a depth level corresponding to at least part of the at least one target segmentation region in the target segmentation image according to the target segmentation image and the target depth image. The layering image generation module is configured to generate the target layering image corresponding to the two-dimensional scene image based on the target segmentation region and the depth level corresponding to the at least part of the at least one target segmentation region.

In addition, although the operations are depicted in a particular order, this should not be construed as requiring that such operations should be executed in the particular order shown or in a sequential order. In certain circumstances, multitasking and parallel processing may be advantageous. Similarly, although specific implementation details are contained in the preceding discussion, these should not be construed as limiting the scope of the present disclosure. Some features described in the context of separate embodiments may also be implemented in combination in a single embodiment. Conversely, various features described in the context of a single embodiment may also be implemented in multiple embodiments individually or in any suitable sub-combination.

## Claims

1. An image layering method, comprising:
acquiring a to-be-processed two-dimensional scene image, and determining a target segmentation image of the two-dimensional scene image and a target depth image of the two-dimensional scene image, wherein the target segmentation image comprises at least one target segmentation region;
determining a depth level corresponding to at least part of the at least one target segmentation region in the target segmentation image according to the target segmentation image and the target depth image; and
generating a target layering image corresponding to the two-dimensional scene image based on the at least one target segmentation region and the depth level corresponding to the at least part of the at least one target segmentation region.

2. The image layering method according to claim 1, wherein determining the target segmentation image of the two-dimensional scene image comprises:
determining a semantic segmentation image of the two-dimensional scene image based on a pre-trained semantic segmentation model, wherein preliminary segmentation regions corresponding to at least one semantic category are marked in the semantic segmentation image; and
processing, according to at least part of the preliminary segmentation regions and a semantic category to which each of the preliminary segmentation regions belongs, the semantic segmentation image to obtain the target segmentation image.

3. The image layering method according to claim 2, wherein processing, according to the at least part of the preliminary segmentation regions and the semantic category to which each of the preliminary segmentation regions belongs, the semantic segmentation image to obtain the target segmentation image comprises:
determining a to-be-processed segmentation region in at least one preliminary segmentation region of the preliminary segmentation regions marked in the semantic segmentation image;
updating a semantic category of the to-be-processed segmentation region according to a semantic category to which a preliminary segmentation region adjacent to the to-be-processed segmentation region belongs; and
in a case where a semantic category of each to-be-processed segmentation region has been updated, determining a corresponding target segmentation region in the semantic segmentation image according to the semantic category of each of the preliminary segmentation regions, and using an image composed of target segmentation regions corresponding to all the preliminary segmentation regions as the target segmentation image.

4. The image layering method according to claim 3, wherein determining the to-be-processed segmentation region in the at least one preliminary segmentation region of the preliminary segmentation regions marked in the semantic segmentation image comprises:
determining the to-be-processed segmentation region in the at least one preliminary segmentation region marked in the semantic segmentation image according to a region area of each of the preliminary segmentation regions.

5. The image layering method according to claim 4, wherein determining the to-be-processed segmentation region in the at least one preliminary segmentation region of the preliminary segmentation regions marked in the semantic segmentation image according to the region area of each of the preliminary segmentation regions comprises:
for each of the preliminary segmentation regions, using a preliminary segmentation region of the at least one preliminary segmentation region marked in the semantic segmentation image whose region area is less than or equal to a preset area threshold as the to-be-processed segmentation region; or,
for each of the preliminary segmentation regions, using a preliminary segmentation region of the at least one preliminary segmentation region marked in the semantic segmentation image whose proportion of region area to image area of the semantic segmentation image does not exceed a preset proportion threshold as the to-be-processed segmentation region.

6. The image layering method according to claim 3, wherein updating the semantic category of the to-be-processed segmentation region according to the semantic category to which the preliminary segmentation region adjacent to the to-be-processed segmentation region belongs comprises:
acquiring the preliminary segmentation region adjacent to the to-be-processed segmentation region in the semantic segmentation image as a reference adjacent region; and
determining a target reference adjacent region corresponding to the to-be-processed segmentation region according to the reference adjacent region, and updating a semantic category to which the target reference adjacent region belongs to the semantic category of the to-be-processed segmentation region.

7. The image layering method according to claim 6, wherein determining the target reference adjacent region corresponding to the to-be-processed segmentation region according to the reference adjacent region comprises:
calculating an overlapping length of a boundary of the to-be-processed segmentation region and boundaries of a plurality of reference adjacent regions, separately, and using a reference adjacent region of the plurality of reference adjacent regions that has a longest overlapping length with the boundary of the to-be-processed segmentation region as the target reference adjacent region corresponding to the to-be-processed segmentation region.

8. The image layering method according to claim 1, wherein determining the target depth image of the two-dimensional scene image comprises:
determining the target depth image of the two-dimensional scene image based on a pre-trained depth estimation model, wherein the depth estimation model is trained according to a sample two-dimensional image and an expected depth image corresponding to the sample two-dimensional image.

9. The image layering method according to claim 1, determining the depth level corresponding to the at least part of the at least one target segmentation region in the two-dimensional scene image according to the target segmentation image and the target depth image comprises:
for each target segmentation region whose depth level is to be determined, determining a depth information feature of the each target segmentation region according to the target depth image, wherein the depth information feature comprises at least one of depth mean or depth variance of at least part of pixels in the each target segmentation region; and
performing, according to the depth information feature of each target segmentation region, clustering processing on the each target segmentation region to obtain a depth level corresponding to the each target segmentation region in the target segmentation image.

10. The image layering method according to claim 9, wherein performing, according to the depth information feature of each target segmentation region, the clustering processing on the each target segmentation region comprises:
performing the clustering processing on the each target segmentation region according to the depth information feature of the each target segmentation region and a preset unsupervised clustering algorithm, wherein the preset unsupervised clustering algorithm comprises at least one of a Euclidean distance-based clustering algorithm, a hierarchical clustering algorithm, a non-linear dimensionality reduction clustering algorithm, or a density-based clustering algorithm.

11. The image layering method according to claim 1, wherein generating the target layering image corresponding to the two-dimensional scene image based on the depth level corresponding to each of the at least one target segmentation region comprises:
marking each of the at least one target segmentation region in the target segmentation image based on a preset region marking manner corresponding to each depth level and a depth level corresponding to the each of the at least one target segmentation region to obtain the target layering image corresponding to the two-dimensional scene image.

12. The image layering method according to claim 1, wherein acquiring the to-be-processed two-dimensional scene image comprises:
in response to an image conversion trigger operation, acquiring the to-be-processed two-dimensional scene image; and
wherein after generating the target layering image corresponding to the two-dimensional scene image based on the at least one target segmentation region and the depth level corresponding to the at least part of the at least one target segmentation region, the method further comprises:
generating a three-dimensional scene image based on the two-dimensional scene image and the target layering image, and displaying the three-dimensional scene image.

13. An image layering apparatus, comprising:
a scene image acquisition module, which is configured to acquire a to-be-processed two-dimensional scene image and determine a target segmentation image of the two-dimensional scene image and a target depth image of the two-dimensional scene image, wherein the target segmentation image comprises at least one target segmentation region;
a depth level determination module, which is configured to determine a depth level corresponding to at least part of the at least one target segmentation region in the target segmentation image according to the target segmentation image and the target depth image; and
a layering image generation module, which is configured to generate a target layering image corresponding to the two-dimensional scene image based on the at least one target segmentation region and the depth level corresponding to the at least part of the at least one target segmentation region.

14. An electronic device, comprising:
at least one processor; and
a memory configured to store at least one program,
wherein the at least one program, when executed by the at least one processor, cause the at least one processor to implement the image layering method according to any one of claims 1 to 12.

15. A storage medium comprising a computer-executable instruction, wherein the computer-executable instruction, when executed by a processor of a computer, is configured to execute the image layering method according to any one of claims 1 to 12.
